# FASCICULE DE BREVET EUROPEEN

(11) **EP 0 684 777 B1**
(45) Date de publication et mention de la délivrance du brevet: **25.04.2001**
(21) Numéro de dépôt: 92921846.9
(22) Date de dépôt: 05.10.1992
(51) Int. Cl.: A47J 31/00, A47J 31/04

(54) **CAFETIERE A PRESSION ET TEMPERATURE BASSES**
KAFFEEMASCHINE MIT NIEDRIGEM DRUCK UND ERNIEDRIGTER TEMPERATUR
LOW TEMPERATURE PRESSURIZED COFFEE MACHINE

(43) Date de publication de la demande: 06.12.1995
(73) Titulaire: Parienti, Raoul, 06000 Nice (FR); Sanchez, Isabelle, 06000 Nice (FR); Figueras, Joseph, 06000 Nice (FR)
(72) Inventeur: Parienti, Raoul, 06000 Nice (FR); Sanchez, Isabelle, 06000 Nice (FR); Figueras, Joseph, 06000 Nice (FR)
(74) Mandataire: Bonneau, Gérard
(86) Numéro de dépôt international: FR9200923
(87) Numéro de publication internationale: WO9407400

(56) Documents cités:
- EP-A- 0 162 305
- CH-A- 177 917
- FR-A- 2 186 209
- FR-A- 2 347 014
- US-A- 2 550 902

## Description

De nos jours, la consommation de café est très généralisée, il est courant de se servir d'un appareil approprié pour réaliser un café. Plusieurs types d'appareils ont vu le jour, le filtre au-dessus duquel on fait passer l'eau chaude, la cafetière filtre à pression manuelle, les cafetières électriques goutte à goutte, qui obtiennent un café plutôt léger, et enfin l'expresso, qui permet de réaliser un café riche en arôme.

En fait, pour réaliser un café de qualité, et au-delà de la qualité du café, et de l'eau, deux paramètres sont à considérer :

La pression et la température.
- L'eau bouillante à cent degrés centigrades traversant une mouture de café, va détruire une partie de l'arôme de ce dernier. et par contre, va en augmenter l'amertume, c'est le type de café obtenu avec les cafetières dites "Italiennes".
- Une eau chaude traversant sans pression une mouture, fut-elle de qualité, donnera un café doux mais pauvre en arôme.

Seul la machine de type expresso, donnera un café de haute qualité, car combinant de façon judicieuse la température et la pression, mais malheureusement ce type de machine est d'un prix élevé, et ne permet pas de se reservir avec aisance.

Déjà dans le brevet US 2550902 déposé en 1951 par Monsieur BECKELMAN, il a été conçue une cafetière qui permettait d'abaisser la température de l'eau portée à ébullition, mais ce dispositif intégrant la zone de diffusion dans la poignet, ne pouvait évacuer suffisamment de calories pour obtenir un résultat significatif, d'ailleurs, cet appareil n'a jamais été diffusé.

Dans le brevet E.P. 0162305, il a été également perçu un dispositif, permettant d'évacuer quelques calories par le biais d'un conduit métallique massif. Ce dispositif nécessairement lourd, car c'est la masse métallique importante du conduit, qui en se chauffant par conduction, va permettre d'abaisser la température. Le dispositif décrit dans le brevet cité, est utilisé pour un appareil de type expresso électrique, mais n'est pas compatible avec une cafetière légère, permettant de servir, et resservir avec aisance les hôtes, autour d'une table.

Quant au brevet FR-A-2186209, il ne décrit pas une cafetière mais une machine à café, nécessairement lourde par conception, car l'élément diffuseur est un serpentin plongé dans de l'eau dans un des blocs du corps de la machine.

L'invention présentée ci-dessous, permet de remédier à l'ensemble de ces inconvénients en réalisant une cafetiére ayant les caractéristiques définies à la revendication 1, les revendications 2-8 definissant des modes particuliers d'execution. Il s'agit en fait d'une cafetière de type Italienne, mais contrairement au dispositif connu à ce jour, l'eau portée à ébullition ne traverse pas le café directement à haute température, mais est auparavant refroidie par un circuit radiateur. Ce circuit radiateur peut avoir toutes les formes possibles, il peut être plat, cylindrique, torique, il peut comporter des ailettes pour accentuer le niveau des échanges thermiques.

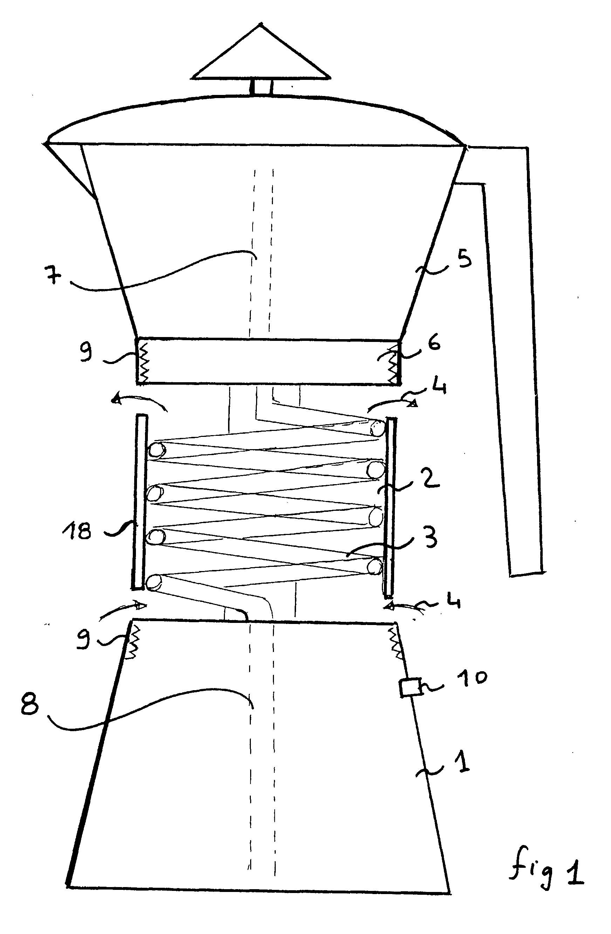

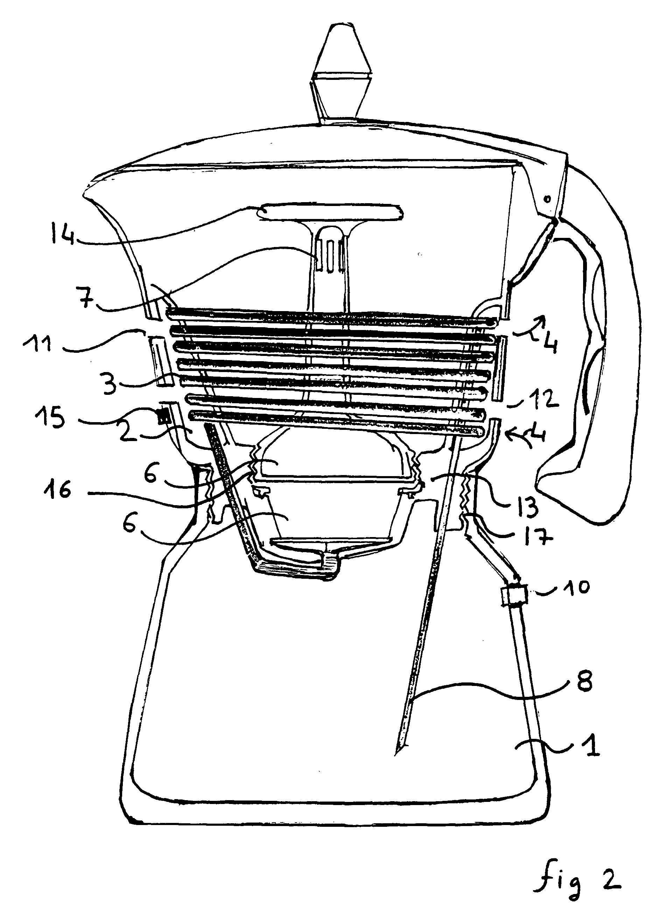

Ce circuit radiateur est constitué d'un serpentin hélicoïdal, disposé a l'extérieur de la cafetière, Fig 1 planche 1, ou dans le corps de la cafetière, Fig 1 planche 2, avec des ouvertures réglables, ou non, permettant une circulation d'air par convexion, nécessaire à l'évacuation des calories en trop.

Selon un mode de réalisation non exhaustive de l'invention, fig 1, planche 1, la cafetière à pression basse température est réalisée en trois corps :
- Un corps inférieur (1) destiné à recevoir l'eau, qui est portée à ébullition par une source quelconque de chaleur.
- Un corps intermédiaire (2) destiné à la diffusion des calories, réalisé par un serpentin hélicoïdal (3), permettant sous un volume réduit d'obtenir une longueur de conduit suffisante, pour que le liquide qui le traverse puisse perdre environ dix à quinze degrés centigrades, grâce à la circulation d'air (4) par convexion.
- Un compartiment supérieur (5) destiné à recevoir le café. Selon la description du fonctionnement de l'invention, l'eau contenue dans le compartiment inférieur (1) est portée à ébullition par une source de chaleur quelconque, gaz, socle chauffant électrique etc... La mise en ébullition de l'eau, provoque une augmentation de la pression dans le compartiment (1). Ladite pression va permettre à l'eau de monter le long du conduit (8) et va ensuite traverser le serpentin hélicoïdal (3), lui-même constitué d'un nombre de spires suffisants, pour que l'eau qui a été portée à ébullition perde plusieurs degrés centigrades en le traversant, grâce à la circulation d'air (4) par convexion, de sorte que l'eau atteigne, et traverse la mouture du compartiment (6), à une température optimale, ce qui permet d'extraire l'arôme du café et non l'amertume. Après avoir traversée le compartiment (6), l'eau devenue café est acheminée dans le compartiment (5) par le conduit (7).

Un système de sécurité (10) se déclenche si une surpression anormale se produit dans le compartiment inférieur (1)

Les corps inférieurs (1) intermédiaires (2) et supérieurs, (5) sont solidarisés les uns avec les autres, par vissage (9).

En outre, de la fonctionnalité originale présentée dans le présent brevet, la cafetière à pression basse température, peut avoir un aspect attractif, grâce à la vue des spires (3), qui peuvent être protégées par un cylindre transparent (18).

Selon un autre mode de réalisation de l'invention Fig 1, planche 2, l'esprit de l'invention est conservé, mais le corps intermédiaire de diffusion est solidarisé avec le corps supérieur réceptacle du café.

La zone d'échange thermique est réalisée grâce au corps creux. qui comprend des ouvertures, en haut (11) et en bas (12), pour permettre une circulation d'air par convexion, afin d'abaisser la température de l'eau circulant dans le serpentin hélicoïdal.

Selon cette version, l'eau portée à ébullition dans le compartiment inférieur (1), va sous l'effet de la pression, être acheminée dans le conduit (8), et va se refroidir dans le serpentin hélicoïdale (3), et arrivée en haut du serpentin, l'eau va à nouveau être acheminée vers le bas de la cafetière, pour traverser le compartiment à mouture (6). Le café ainsi réalisé, va être acheminé vers le compartiment supérieur réceptacle (5), grâce au conduit (7).

Selon cette dernière version plus sophistiquée, on voit sur la Fig 1 de la planche (2), que le compartiment à mouture est solidarisé avec le conduit supérieur (7). Le bloc compartiment à mouture/conduit, se solidarise avec le corps de l'appareil (13) par vissage, grâce à la manette (14), solidaire du conduit (7). La convexion de l'air peut être régulée à l'aide d'une autre manette(15), conçue pour agir sur le débit d'air susceptible de traverser le compartiment diffuseur (2).

Selon une version plus simplifiée de la précédente, le vissage (16) est supprimé, et le conduit (7) est solidarisé avec le corps (13) de l'appareil, dans cette dernière version la manette (14) n'a plus de raison d'être, et seul le vissage (17) permet de solidariser le corps supérieur comprenant le réceptacle à café et la zone de diffusion, avec le bloc inférieur contenant l'eau.

## Revendications

1. Cafetière à pression basse température constituée d'un corps inférieur (1) destiné à recevoir l'eau qui est portée à ébullition par une source quelconque de chaleur, un corps supérieur (5) destiné à recevoir le café, caractérisée en ce qu'elle comprend en outre, un corps intermédiaire (2) qui comporte un serpentin hélicoïdal (3) dans lequel l'eau sous pression dans ledit corps inférieur monte dudit corps inférieur audit corps supérieur et dispose d'ouvertures (4) en partie basse et en partie haute réalisant une circulation d'air par convection et permettant à l'eau dans ledit serpentin de perdre plusieurs degrés centigrades de sorte que l'eau atteigne et traverse la mouture du compartiment (6) à une température optimale.

2. Cafetière à pression basse température selon la revendication 1, caractérisée en ce que les spires dudit serpentin sont visibles et protégées par un cylindre transparent.

3. Cafetière à pression basse température selon la revendication 1, caractérisée en ce que, le corps intermédiaire (2) est solidaire dudit corps supérieur réceptacle du café (5).

4. Cafetière à pression basse température selon la revendication 1 ou 3, caractérisée en ce que l'eau après avoir traversé ledit serpentin hélicoïdal (3) et arrivée en haut dudit serpentin est de nouveau acheminée vers le bas de la cafetière pour traverser le compartiment à mouture (6).

5. Cafetière à pression basse température selon l'une des revendications 1, 3 ou 4, caractérisée en ce que le compartiment à mouture (6) est solidarisé avec le conduit supérieur (7).

6. Cafetière à pression basse température selon la revendication 5, caractérisée en ce que le bloc formé dudit compartiment à mouture (6) et dudit conduit supérieur se solidarise avec le corps de l'appareil (13) par vissage grâce à la manette (14)

7. Cafetière de type italienne à pression basse température selon les revendications 1 et 3, caractérisé en ce que seul le vissage (17) permet de solidarisé le corps supérieur contenant le receptacle à café et la zone de diffusion, avec le corps inférieur.

8. Cafetière de type italienne à pression basse température selon la revendication 1, caractérisé en ce que la convexion de l'air peut être régulée à l'aide d'une manette (15) conçue pour agir sur le débit d'air (4) susceptible de traverser le compartiment diffuseur(2).

## Patentansprüche

1. Druckkaffeemaschine mit niedriger Temperatur, bestehend aus einem unteren Körper (1), der dazu bestimmt ist, das Wasser aufzunehmen, das durch eine beliebige Wärmequelle zum Kochen gebracht wird, und einem oberen Körper (5), der dazu bestimmt ist, den Kaffee aufzunehmen, dadurch gekennzeichnet, daß sie außerdem einen Zwischenkörper (2) aufweist, der eine schraubenförmige Schlange (3) besitzt, in der das unter Druck stehende Wasser im unteren Körper von diesem unteren Körper in den oberen Körper aufsteigt, und unten und oben über Öffnungen (4) verfügt, die einen Luftumlauf durch Konvektion herstellen und dem Wasser in der Schlange erlauben, mehrere Grad Celsius zu verlieren, so daß das Wasser das Mahlgut der Kammer (6) mit einer optimalen Temperatur erreicht und durchquert.

2. Druckkaffeemaschine mit niedriger Temperatur nach Anspruch 1, dadurch gekennzeichnet, daß die Windungen dieser Schlange sichtbar sind und durch einen transparenten Zylinder geschützt sind.

3. Druckkaffeemaschine mit niedriger Temperatur nach Anspruch 1, dadurch gekennzeichnet, daß der Zwischenkörper (2) mit dem den Kaffee aufnehmenden oberen Körper (5) fest verbunden ist.

4. Druckkaffeemaschine mit niedriger Temperatur nach Anspruch 1 oder 3, dadurch gekennzeichnet, daß das Wasser nach Durchqueren der schraubenförmigen Schlange (3) und Erreichen des oberen Teils dieser Schlange wieder in den unteren Teil der Kaffeemaschine befördert wird, um die Mahlgutkammer (6) zu durchqueren.

5. Druckkaffeemaschine mit niedriger Temperatur nach einem der Ansprüche 1 oder 4, dadurch gekennzeichnet, daß die Mahlgutkammer (6) mit der oberen Leitung (7) fest verbunden ist.

6. Druckkaffeemaschine mit niedriger Temperatur nach Anspruch 5, dadurch gekennzeichnet, daß der aus der Mahlgutkammer (6) und der oberen Leitung gebildete Block mit dem Körper (13) der Vorrichtung durch Verschrauben mit Hilfe des Griffs (14) befestigt wird.

7. Druckkaffeemaschine vom italienischen Typ mit niedriger Temperatur nach den Ansprüchen 1 und 3, dadurch gekennzeichnet, daß nur die Verschraubung (17) die Befestigung des den Kaffeebehälter und den Diffusionsbereich enthaltenden oberen Körpers mit dem unteren Körper gestattet.

8. Druckkaffeemaschine vom italienischen Typ mit niedriger Temperatur nach Anspruch 1, dadurch gekennzeichnet, daß die Konvektion der Luft mit Hilfe eines Bedienelements (15) reguliert werden kann, das ausgelegt ist, um auf den Luftdurchsatz (4) einzuwirken,der die Diffusionskammer (2) durchqueren kann.

## Claims

1. Low temperature pressurized coffee machine comprising a lower body (1) for receiving water brought to the boil by any heating means, an upper body (5) for receiving coffee, characterized in that it further comprises an intermediate body (2) including a spiral coil (3) in which the water under the effect of pressure goes up from said lower body to said upper body, said spiral coil having openings (4) at lower and upper ends permitting air circulation by convection and enabling water in the spiral coil to lose several degrees centigrade, so that the water reaches and passes through the ground coffee in collector (6) at an optimal temperature.

2. Low temperature pressurized coffee machine according to claim 1, characterized in that the whorls of said spiral coil are visible and are protected by a transparent cylinder.

3. Low temperature pressurized coffee machine according to claim 1, characterized in that the intermediate body (2) is integral with said upper body receiving the coffee.

4. Low temperature pressurized coffee machine according to claim 1 or 3, characterized in that, when the water passes said spiral coil (3) and arrives at the top of said spiral coil, it is routed back toward the bottom of the machine to passe through the ground coffee collector (6).

5. Low temperature pressurized coffee machine according to claim 1, 3 or 4, characterized in that the ground coffee collector (6) is integral with the upper pipe (7).

6. Low temperature pressurized coffee machine according to claim 5, characterized in that the block consisting of said ground coffee collector (6) and said upper pipe (7) is secured to the machine body (13) by screwing thanks to a handle (14).

7. Low temperature pressurized coffee machine of Italian type according to claims 1 and 3, characterized in that the only screwing (17) can secure the upper body receiving the coffee and the diffusion area, with the lower body.

8. Low temperature pressurized coffee machine of Italian type according to claim 1, characterized in that air convection can be regulated thanks to a handle (15) designed to act on the air flow (4) liable to pass through the diffusing compartment (2).
